# EUROPÄISCHE PATENTSCHRIFT

(11) **EP 4 043 386 B1**
(45) Veröffentlichungstag und Bekanntmachung des Hinweises auf die Patenterteilung: **01.05.2024**
(21) Anmeldenummer: 22155522.0
(22) Anmeldetag: 08.02.2022
(51) Int. Cl.: B66F 9/06, B66F 9/075

(54) **SYSTEM ZUM FÜHREN EINES FLURFÖRDERZEUGS**
SYSTEM FOR GUIDING AN INDUSTRIAL TRUCK
SYSTÈME DE GUIDAGE D'UN CHARIOT DE MANUTENTION

(30) Priorität: 10.02.2021 DE 102021103052
(43) Veröffentlichungstag der Anmeldung: 17.08.2022
(73) Patentinhaber: Jungheinrich Aktiengesellschaft, 22047 Hamburg (DE)
(72) Erfinder: Hämmerl, Robert, 6320 Angerberg (AT)
(74) Vertreter: Weickmann & Weickmann PartmbB

(56) Entgegenhaltungen:
- EP-A2- 3 118 706
- US-A- 5 938 710
- US-A1- 2013 096 735
- US-A1- 2018 029 797
- US-A1- 2020 026 304
- US-A1- 2020 101 971

## Beschreibung

Die vorliegende Erfindung betrifft ein System zum Führen eines Flurförderzeugs in einem Regallager, ein Flurförderzeug umfassend ein solches System und ein Verfahren zum Führen eines Flurförderzeugs mit einem solchen System.

Damit Flurförderzeuge, insbesondere Hochregal- oder Schmalgangstapler, in Regalgassen mit minimalen Gassenbreiten zuverlässig und sicher arbeiten können, sind Führungssysteme unabdingbar. Durch die Führungssysteme sind zudem ein autonomes Fahren der Flurförderzeuge in einem Regallager sowie hohe Fahr- und Hubgeschwindigkeiten möglich. Dafür kommen aktuell in der Praxis vor allem Schienenführungssysteme und Induktivführungssysteme häufig zum Einsatz.

Bei Schienenführungssystemen wird das Flurförderzeug mit Hilfe von seitlichen Führungsrollen und Führungsschienen in einer Spur zwischen den Führungsschienen gehalten.

Bei Induktivführungssystemen wird hingegen in der Mitte eines geplanten Fahrwegs im Lagerboden ein wechselstromdurchflossener Leitdraht verlegt, wobei wenigstens zwei Antennen jeweils an der Vorderseite und Hinterseite des entsprechenden Flurförderzeugs angebracht sind, um ein Magnetfeld des Leitdrahts zu erfassen und somit Abstände zwischen der jeweiligen Antenne und dem Leitdraht zu bestimmen. Auf Basis der bestimmten Abstände erzeugt eine Steuereinheit gegebenenfalls eine Lenkwinkelvorgabe, um Abweichungen von der gewünschten Fahrt entgegenzuwirken oder auszuregeln.

Die oben beschriebenen Führungssysteme haben jedoch ihre Nachteile. Für die Schienenführung müssen in allen Regalgassen entlang des geplanten Fahrwegs Führungsschienen angebracht werden. Die Führungsschienen bedingen hierbei wiederum einen Sockel bzw. eine untere Regalauflage, da durch die Führungsschienen Waren nicht direkt auf dem Boden abgestellt werden können. Im Gegensatz dazu ist das Induktivführungssystem wesentlich einfacher in den Fahrweg einzubringen, wobei ein Abstellen der Ladung auf dem Boden nicht dadurch behindert wird. Allerdings ist ein erheblicher Installationsaufwand für den Leitdraht in jedem Regalgang erforderlich.

Um ein autonomes oder halb-autonomes Fahren zu ermöglichen, bieten Lagernavigationssysteme ebenfalls Lösungen an, Flurförderzeuge zu führen, um Kollisionen mit Objekten in der Umgebung zu vermeiden.

Aus der US 8,965,561 B2 und der US 10,346,797 B2 ist jeweils ein automatisiertes Materialhandhabungssystem bekannt, wobei Sensoren an einem Flurförderzeug angebracht sind, um Objekte in seiner Umgebung zu erfassen, sodass eine kollisionsfreie Fortbewegungsroute des Flurförderzeugs geplant werden kann. Problematisch ist dabei, dass einerseits die für das Ausrichten des Flurförderzeugs geeignete, feststehende Regalstruktur durch eingelagerte, bewegliche Waren verdeckt sein kann, und andererseits ein Ausrichten alleine an den beweglichen Waren nicht sinnvoll ist, da es passieren könnte, dass die Waren nicht ordentlich eingelagert sind oder die Waren nur auf einer Seite einer Regalgasse eingelagert sind und ein Lagerplatz auf der gegenüberstehenden Seite der Regalgasse leer ist. Zudem besteht die Gefahr, dass die Waren trotz der exakten Einlagerung wieder ausgelagert oder umgelagert werden, sodass sich die zu erfassenden Warenkonturen mit der Zeit schnell ändern können.

Ferner sind gattungsgemäße Systeme und Verfahren aus der US 2013/096 735 A1, der US 2020/026 304 A1 und der US 5 938 710 A bekannt. EP 3 118 706 A2 offenbart ein System nach dem Oberbegriff von Anspruch 1 und ein Verfahren nach dem Oberbegriff von Anspruch 9.

Es ist eine Aufgabe der vorliegenden Erfindung, gemäß den nachfolgenden Aspekten eine verbesserte oder alternative Lösung zum Führen eines Flurförderzeugs, insbesondere eines Schmalgangstaplers, in Bezug auf den Stand der Technik bereitzustellen, um einen reduzierten Installationsaufwand und ein trotzdem zuverlässiges Führen des Flurförderzeugs in einem Regallager zu ermöglichen.

Gemäß einem ersten Aspekt der Erfindung wird diese Aufgabe gelöst durch ein System zum Führen eines Flurförderzeugs in einem Regallager, wobei das Regallager eine Mehrzahl von Regalstehern umfasst, wobei das System umfasst: eine Sensoreinheit, welche dafür eingerichtet ist, Fahrzeugpositionsdaten zu erfassen, welche eine relative oder absolute momentane Position des Flurförderzeugs repräsentieren; eine Regalsteherbestimmungseinheit, welche dafür eingerichtet ist, wenigstens einen bei einer Weiterfahrt des Flurförderzeugs zu erwartenden Regalsteher sowie Regalsteherpositionsdaten zu bestimmen, welche eine relative oder absolute Position des wenigstens eines Regalstehers repräsentieren; eine Recheneinheit, welche dafür eingerichtet ist, mit der Sensoreinheit und der Regalsteherbestimmungseinheit in Kommunikation zu stehen und eine Wunschfahrroute des Flurförderzeugs auf Basis der Fahrzeugpositionsdaten und der Regalsteherpositionsdaten zu berechnen; und eine Steuereinheit, welche dafür eingerichtet ist, das Flurförderzeug auf Basis der Wunschfahrroute zu führen.

Regalsteher sind feststehende regalbildende Komponenten, deren Positionen sich mit der Zeit in der Regel nicht ändern. Ein Regalsteher kann ein Vertikalträger, ein Horizontalträger oder eine Kombination davon sein. Um den wenigstens einen bei einer Weiterfahrt des Flurförderzeugs zu erwartenden Regalsteher zu bestimmen, kann eine Navigationskarte in der Regalsteherbestimmungseinheit oder in einem externen System vorgespeichert werden, welches mit der Regalsteherbestimmungseinheit in Kommunikation steht. In der Navigationskarte sind vorzugsweise die Positionen feststehender Regalsteher abgespeichert, sodass die Regalsteherbestimmungseinheit bestimmen kann, welche Regalsteher das Flurförderzeug bei einer Weiterfahrt zu erwarten hat, wenn sich das Flurförderzeug von einem Startpunkt zu einem geplanten Endpunkt fortbewegt, sofern die momentane Position des Flurförderzeugs bekannt ist.

Die Hauptidee der Erfindung liegt darin, die Wunschfahrroute des Flurförderzeugs mithilfe der unveränderlichen Regalsteherpositionen zu planen. Die Regalsteherpositionsdaten können in einer lokalen oder externen Dateneinheit abgespeichert werden, sodass die Regalsteherbestimmungseinheit die Regalsteherpositionsdaten abrufen kann, ohne Regalsteher sensorisch erfassen zu müssen. Alternativ können Regalsteher ebenfalls jeweils durch z.B. einen RFID-Transponder gekennzeichnet werden, in dem entweder nur eine eindeutige Kennzeichnungsnummer oder sowohl eine Kennzeichnungsnummer als auch die Regalsteherpositionsdaten der jeweiligen Regalsteher gespeichert werden, sodass die Regalsteherbestimmungseinheit bei Erfassung des RFID-Transponders entsprechende Regalsteherpositionsdaten direkt von dem Transponder ablesen oder von einem externen System abrufen kann.

Um die Wunschfahrroute zu verbessern oder eine eventuelle Kollision mit schlecht eingelagerten Waren zu vermeiden, umfasst das System ferner eine Konturerfassungseinheit, welche dafür eingerichtet ist, Konturen von Regalen und den in den Regalen aufgenommenen Gegenständen, wie beispielsweise Paletten, zu erfassen.

Die Recheneinheit ist ferner dafür eingerichtet, mit der

Konturerfassungseinheit in Kommunikation zu stehen und gegebenenfalls die Wunschfahrroute auf Basis der erfassten Konturen anzupassen. Dadurch kann das Flurförderzeug auf einer verbesserten Fahrroute geführt werden, wobei z.B. ein Mindestabstand zwischen dem Flurförderzeug und den eingelagerten Paletten an der Seite eines Regalgangs eingehalten werden kann.

Um den wenigstens einen Regalsteher und/oder die Regalsteherpositionsdaten zu bestimmen, ist die Regalsteherbestimmungseinheit vorzugsweise dafür eingerichtet, mit einer lokalen Speichereinheit, einem Lagerverwaltungssystem oder einem Lagernavigationssystem in Kommunikation zu stehen, wobei die Regalsteherbestimmungseinheit ferner dafür eingerichtet ist, den wenigstens einen Regalsteher und/oder die Regalsteherpositionsdaten mithilfe der lokalen Speichereinheit, des Lagerverwaltungssystems oder des Lagernavigationssystems zu bestimmen, ohne den wenigstens einen Regalsteher sensorisch erfassen zu müssen. In der lokalen Speichereinheit, dem Lagerverwaltungssystem oder dem Lagernavigationssystem werden vorzugsweise Regalmodule mit verschiedenen kennzeichnenden Parametern in Bezug auf Regalstrukturen festgelegt, wobei die Parameter beispielsweise die Dimensionen der jeweiligen Regalfächer, die Positionen eines kennzeichnenden Transponders im Eingangsbereich eines Regalgangs bzw. den Abstand des Transponders zu dem ersten Regalsteher eines Regalgangs, die Länge des Regalgangs, die Breite des Regalgangs usw. umfassen können, aus denen die absoluten und/oder die relativen Positionen der einzelnen Regalsteher direkt oder indirekt abgerufen und/oder bestimmt werden können.

Um die Wunschfahrroute zu ermitteln, ist die Recheneinheit vorzugsweise dafür eingerichtet, die Wunschfahrroute derart zu berechnen, dass die Wunschfahrroute und der wenigstens eine Regalsteher einen vordefinierten Abstand haben.

Für eine Fahrt in einer Regalgasse, auf deren beiden Seiten Regale eingerichtet sind, ist die Regalsteherbestimmungseinheit vorzugsweise dafür eingerichtet, ein zu erwartendes Paar von Regalstehern auf beiden Seiten einer Regalgasse sowie Regalsteherpositionsdaten von den Regalstehern des Paars zu bestimmen, wobei die Wunschfahrroute des Flurförderzeugs auf Basis der Fahrzeugpositionsdaten und des Mittelpunkts zwischen den Regalstehern des Paars berechnet wird.

Um die Fahrzeugpositionsdaten des Flurförderzeugs zu erfassen, umfasst die Sensoreinheit in einer bevorzugten Ausführungsform einen Abstandssensor, welcher dafür eingerichtet ist, einen Abstand des Flurförderzeugs zu einem Referenzobjekt zu erfassen, wobei der Abstandssensor vorzugsweise ein Time-of-Flight-Sensor ist. Auf Basis des Abstands in Kombination mit anderen Informationen, wie beispielsweise der Orientierung des Abstandssensors, kann die relative Position des Flurförderzeugs bestimmt werden.

In einer weiteren bevorzugten Ausführungsform ist die Sensoreinheit dafür eingerichtet, Odometriedaten des Flurförderzeugs zu erfassen, aus denen die Fahrzeugpositionen bestimmt werden können. Odometriedaten eines Fahrzeugs beinhalten Positions- und Orientierungsdaten des Fahrzeugs, die mittels seines Vortriebsystems ermittelt werden. Zur Ermittlung der Odometriedaten eines Fahrzeugs werden in der Regel Messgrößen aus wenigstens einem Raddrehzahlsensor im Fahrwerk, einem Gierratensensor in beispielsweise einem Antiblockiersystem (ABS) oder einem Fahrdynamikregler (ESP) und einem Lenkungssensor für eine Lenkradwinkelmessung verwendet, wobei für spurgeführte Fahrzeuge die Messgrößen aus dem Raddrehzahlsensor auch alleine ausreichen können.

Ferner kann die Sensoreinheit ein RFID-Lesegerät umfassen, wobei das RFID-Lesegerät vorzugsweise an dem Flurförderzeug angebracht ist und dafür eingerichtet ist, z.B. im Boden eingelassene RFID-Transponder zu erfassen, die jeweils eine festgelegte Position repräsentieren, sodass die Fahrzeugpositionsdaten des Flurförderzeugs darauf basierend bestimmt werden können.

Um Kollisionen mit herausragenden Paletten oder anderen Objekten auf dem Fahrweg zu vermeiden, umfasst das System vorzugsweise ferner einen Antikollisionssensor, welche dafür eingerichtet ist, Objekte in seiner Umgebung zu erfassen, wobei die Steuereinheit ferner dafür eingerichtet ist, bei Erfassung eines Objekts gegebenenfalls das Flurförderzeug zu bremsen oder das Flurförderzeug von der Wunschfahrroute umzulenken.

Alternativ oder zusätzlich könnte derartig herausragenden Paletten jedoch unter Umständen auch in einer Weise begegnet werden, dass keine Umlenkung von der Wunschfahrroute stattfindet, sondern lediglich eine Vorbeifahrt des Flurförderzeugs daran mit reduzierter Geschwindigkeit und/oder eine Markierung davon in dem angesprochenen Lagerverwaltungssystem für eine Positionskorrektur.

Vorzugsweise sind der Antikollisionssensor und die Konturerfassungseinheit durch einen einzelnen Sensor gebildet, welcher vorzugsweise ein Laserscanner ist. Laserscanner sind elektro-optische Sensoren, die ihre Umgebung mittels eines schnell rotierenden Laser-Messstrahls abtasten, wobei die Messung auf dem sogenannten Time-of-Flight-Verfahren basiert. Ein marktüblicher Laserscanner ist meist dafür eingerichtet, die Umgebung in einer Ebene abzutasten, wobei ein gepulster Laserstrahl mithilfe eines rotierenden Spiegels in verschiedene Richtungen in der Ebene abgelenkt wird. Die Abtastung kann bei einem marktüblichen Laserscanner in einem Sektor von bis zu 270° stattfinden. Aus Sicherheitsgründen ist an vielen Flurförderzeugen bereits wenigstens ein Laserscanner vorhanden. Der Laserscanner kann sowohl für den Antikollisionszweck als auch für die Konturerfassung verwendet werden, wodurch ein zusätzlicher Installationsaufwand vermieden werden kann.

Gemäß einem zweiten Aspekt betrifft die Erfindung ein Flurförderzeug, umfassend ein erfindungsgemäßes System, wobei das Flurförderzeug vorzugsweise ein Schmalgangstapler ist. Das System nach dem ersten Aspekt der Erfindung dient vorzugsweise als eine Erweiterung des Flurförderzeugs, wobei sich die Vorteile des Flurförderzeugs aus den Vorteilen des Systems ergeben.

Um eine geeignete Fahrkontur zu planen, umfasst das Flurförderzeug vorzugsweise eine Geometriedateneinheit, welche dafür eingerichtet ist, Geometriedaten des Flurförderzeugs abzuspeichern. Die Geometriedaten umfassen unter anderem die Breite und die Länge des Flurförderzeugs, sodass ein Abstand des Flurförderzeugs zu den eingelagerten Waren oder zu anderen Objekten richtig berechnet werden kann.

Gemäß einem dritten Aspekt betrifft die Erfindung ein Verfahren zum Führen eines Flurförderzeugs in einem Regallager mittels eines erfindungsgemäßen Systems, wobei das System gegebenenfalls einem erfindungsgemäßen Flurförderzeug zugeordnet ist, umfassend: Erfassen von Fahrzeugpositionsdaten des Flurförderzeugs, welche eine relative oder absolute momentane Position des Flurförderzeugs repräsentieren; Bestimmen von wenigstens einem bei einer Weiterfahrt des Flurförderzeugs zu erwartenden Regalsteher sowie von Regalsteherpositionsdaten, welche eine relative oder absolute Position des wenigstens einen Regalstehers repräsentieren; Berechnen einer Wunschfahrroute auf Basis der Regalpositionsdaten und der Fahrzeugpositionsdaten; Führen des Flurförderzeugs auf Basis der Wunschfahrroute.

Gemäß dem dritten Aspekt der Erfindung umfasst das Verfahren ferner ein Erfassen von Konturen von Regalen und den in den Regalen aufgenommenen Gegenständen, wobei das Verfahren ein Anpassen der Wunschfahrroute auf Basis der erfassten Konturen umfasst. Zusätzlich könnte derartig herausragenden Paletten jedoch unter Umständen auch in einer Weise begegnet werden, dass keine Umlenkung von der Wunschfahrroute stattfindet, sondern lediglich eine Vorbeifahrt des Flurförderzeugs daran mit reduzierter Geschwindigkeit und/oder eine Markierung davon in dem angesprochenen Lagerverwaltungssystem für eine Positionskorrektur.

Vorzugsweise werden die Regalsteherpositionsdaten aus einer lokalen Speichereinheit, einem Lagerverwaltungssystem oder einem Lagernavigationssystem abgerufen, ohne den wenigstens einen Regalsteher sensorisch erfassen zu müssen.

Für eine Fahrt in einer Regalgasse, auf deren beiden Seiten Regale eingerichtet sind, umfasst das Verfahren vorzugsweise ferner ein Bestimmen von einem bei einer Weiterfahrt des Flurförderzeugs zu erwartenden Paar von Regalstehern sowie von Regalsteherpositionsdaten der Regalsteher des Paars, wobei die Wunschfahrroute des Flurförderzeugs vorzugsweise auf Basis der Fahrzeugpositionsdaten und des Mittelpunkts zwischen den Regalstehern des Paars berechnet wird.

In einer weiteren bevorzugten Ausführungsform nach dem dritten Aspekt der Erfindung umfasst das Verfahren ferner ein Erfassen von einem Abstand des Flurförderzeugs zu einem Referenzobjekt.

Ergänzend oder alternativ kann das Verfahren ferner ein Erfassen von Odometriedaten des Flurförderzeugs umfassen.

Vorzugsweise umfasst das Verfahren ferner ein Erfassen eines Objekts in der Umgebung, und ein Bremsen des Flurförderzeugs oder ein Umlenken des Flurförderzeugs von der Wunschfahrroute, um eine Kollision des Flurförderzeugs mit dem Objekt zu vermeiden.

Die Vorteile des Verfahrens nach dem dritten Aspekt der Erfindung sowie seinen oben dargestellten Ausführungsformen ergeben sich jeweils aus den Vorteilen des erfindungsgemäßen Systems sowie seinen entsprechenden Ausführungsformen.

Um eine Übergabe zwischen einem vorhandenen bzw. anderweitigen Navigationssystem und dem erfindungsgemäßen System zum Führen des Flurförderzeugs zu ermöglichen, umfasst das Verfahren vorzugsweise ferner ein Führen des Flurförderzeugs mittels eines vorhandenen bzw. anderweitigen Navigationssystems bis zu einem bestimmten Startübergabepunkt, ab dem das Flurförderzeug mittels des erfindungsgemäßen Systems geführt wird. Das vorhandene bzw. anderweitige Navigationssystem kann auf verschiedenen Navigationstechnologien basieren, welches beispielsweise ein RFID-, Kamera-, Laserscanner-basiertes Navigationssystem oder eine Kombination davon sein kann. Der Startübergabepunkt kann ebenfalls mit verschiedenen Lösungen implementiert werden, wobei als Beispiel ein RFID-Transponder, welcher z.B. eine bestimmte Kennzeichnungsnummer einer Regalgasse abspeichert, in den Boden des Eingangsbereichs der Regalgasse eingelassen werden kann, sodass beim Einfahren des Flurförderzeugs in die Regalgasse der RFID-Transponder erfasst wird und somit die Übergabe von dem Navigationssystem zu dem erfindungsgemäßen System ermöglicht wird.

Analog zu der Übergabe im Eingangsbereich wird vorzugsweise eine Übergabe im Ausgabebereich ebenfalls durchgeführt. Dafür umfasst das Verfahren vorzugsweise ein Führen des Flurförderzeugs mittels des erfindungsgemäßen Systems bis zu einem bestimmten Endübergabepunkt, ab dem das Flurförderzeug mittels eines vorhandenen bzw. anderweitigen Navigationssystems weitergeführt wird. Der Endübergabepunkt kann ebenfalls durch einen RFID-Transponder gekennzeichnet werden.

Die Erfindung wird nachfolgend anhand eines bevorzugten Ausführungsbeispiels unter Bezugnahme auf die beigefügten Zeichnungen näher erläutert. Es zeigen:
- Fig. 1: eine schematische Darstellung eines Ausführungsbeispiels des erfindungsgemäßen Systems zum Führen eines Flurförderzeugs;
- Fig. 2: eine schematische Darstellung eines mit dem in Figur 1 gezeigten System geführten Flurförderzeugs in einem Regallager;
- Fig. 3: ein Flussdiagramm eines Verfahrens zum Führen des in Fig. 2 gezeigten Flurförderzeugs in einem Regallager mittels des in Fig. 1 gezeigten Systems.

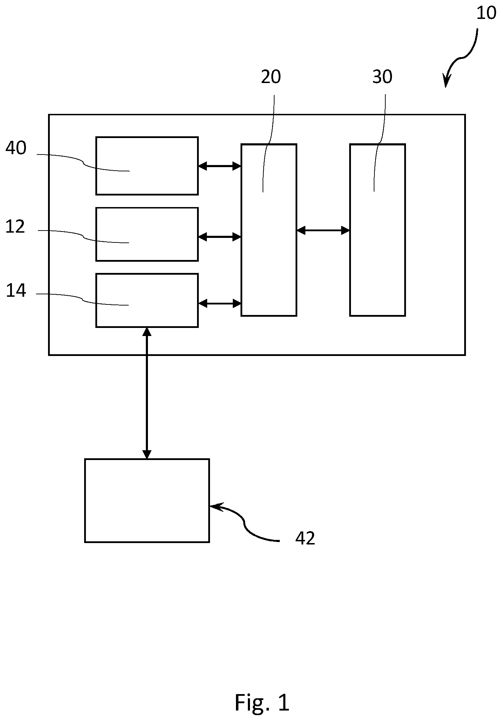

In der in Fig. 1 schematisch dargestellten Ausführungsform umfasst das System 10 zum Führen eines Flurförderzeugs eine Sensoreinheit 12, welche dafür eingerichtet ist, Fahrzeugpositionsdaten des Flurförderzeugs zu erfassen, welche eine relative oder absolute momentane Position des Flurförderzeugs repräsentieren. Die Sensoreinheit 12 in der hier gezeigten Ausführungsform kann ein RFID-Lesegerät umfassen, welches vorzugsweise dafür eingerichtet ist, im Boden eines Lagers eingelassene RFID-Transponder zu lesen, welche jeweils eine bestimmte Position im Lager kennzeichnen, sodass Fahrzeugpositionsdaten des Flurförderzeugs an bestimmen Stellen, wo die RFID-Transponder vorgesehen sind, bestimmt werden können. Andere Lokalisierungstechnologien wie z.B. Bild-, Abstandsmessung-, WLAN- oder Odometriedaten-basierte Lokalisierungen können selbstverständlich die RFID-basierte Lösung ersetzen oder ergänzen, um Fahrzeugpositionsdaten des Flurförderzeugs zu erfassen.

Das System 10 umfasst ferner eine Regalsteherbestimmungseinheit 14, welche dafür eingerichtet ist, wenigstens einen bei einer Weiterfahrt des Flurförderzeugs zu erwartenden Regalsteher sowie Regalsteherpositionsdaten zu bestimmen, welche eine relative oder absolute Position des Regalstehers repräsentieren. Die Regalsteherbestimmungseinheit 14 kann mit einem in Fig. 1 gezeigten Lagernavigationssystem 42 in Kommunikation stehen, in welchem eine Navigationskarte vorgespeichert werden kann. In der Navigationskarte können die Positionen feststehender Regalsteher abgespeichert werden, sodass die Regalsteherbestimmungseinheit 14 bestimmen kann, welche Regalsteher das Flurförderzeug bei einer Weiterfahrt zu erwarten hat und wo sich die Regalsteher befinden, wenn sich das Flurförderzeug von einem Startpunkt zu einem Endpunkt fortbewegt, sofern die momentane Position des Flurförderzeugs bekannt ist.

Das System 10 umfasst ferner eine Recheneinheit 20, welche dafür eingerichtet ist, mit der Sensoreinheit 12 und der Regalsteherbestimmungseinheit 14 in Kommunikation zu stehen und eine Wunschfahrroute des Flurförderzeugs auf Basis der Fahrzeugpositionsdaten und der Regalsteherpositionsdaten zu berechnen. Eine Steuereinheit 30 ist ebenfalls in dem System 10 vorgesehen, welche dafür eingerichtet ist, mit der Recheneinheit 20 in Kommunikation zu stehen und das Flurförderzeug auf Basis der berechneten Wunschfahrroute zu führen.

Um die Wunschfahrroute zu verbessern oder eine eventuelle Kollision mit schlecht eingelagerten Waren zu vermeiden, kann das System 10 ferner eine Konturerfassungseinheit 40 umfassen, welche dafür eingerichtet ist, Konturen von Regalen und den in den Regalen aufgenommenen Gegenständen, wie beispielsweise Paletten, zu erfassen. Die Recheneinheit 20 ist vorzugsweise ferner dafür eingerichtet, mit der Konturerfassungseinheit 40 in Kommunikation zu stehen und gegebenenfalls auf Basis der erfassten Konturen die Wunschfahrroute anzupassen, mittels der Steuereinheit 30 eine Vorbeifahrt des Flurförderzeugs daran mit reduzierter Geschwindigkeit anzuweisen und/oder Konturdaten an das Lagerverwaltungssystem 42 zu kommunizieren. Die Konturerfassungseinheit 40 kann einen Laserscanner umfassen, welcher für Antikollisionszwecke an vielen Flurförderzeugen bereits vorhanden ist, sodass ein zusätzlicher Installationsaufwand dadurch vermieden werden kann.

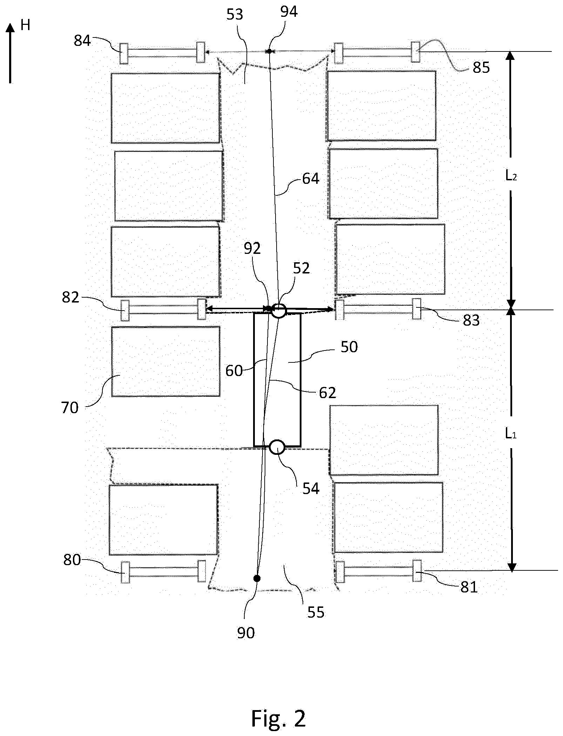

Fig. 2 zeigt ein mit dem in Figur 1 gezeigten System 10 geführtes Flurförderzeug 50 in einer Regalgasse, auf deren beiden Seiten Regale eingerichtet sind, welche mehrere feststehende Regalsteher 80-85 umfassen. Das Flurförderzeug 50 bewegt sich zu dem in Fig. 2 dargestellten Moment in die Hauptfahrrichtung H in der Regalgasse, wobei eine Fahrt in der der Hauptfahrrichtung H entgegengesetzten Richtung ebenfalls möglich ist. An der Vorder- und Hinterseiten des Flurförderzeugs sind jeweils ein Laserscanner 52 und 54 vorgesehen, welche, wie bereits diskutiert, sowohl für die Konturerfassung als auch für Antikollisionszwecke verwendet werden können, wobei ein Abtastbereich 53 von dem Laserscanner 52 sowie ein Abtastbereich 55 von dem Laserscanner 54 jeweils mit umlaufenden gestrichelten Linien dargestellt sind.

In der hier dargestellten Ausführungsform ist die Recheneinheit 20 dafür eingerichtet, ein zu erwartendes Paar von Regalstehern auf beiden Seiten der Regalgasse sowie Regalsteherpositionsdaten von den Regalstehern des Paars zu bestimmen. In Fig. 2 sind zwei Teilstrecken L1 und L2 in der Regalgasse gezeigt, die durch drei Paare von Regalstehern definiert sind. Die gestrichelte Linie 60 repräsentiert hierbei eine erste Wunschfahrroute, welche die Recheneinheit 14 durch einen vorherigen Aufenthaltspunkt 90 in der Nähe des ersten Paars von Regalstehern 80 und 81 sowie den Mittelpunkt 92 zwischen dem zu erwartenden zweiten Paar von Regalstehern 82 und 83, als das Flurförderzeug 50 am Punkt 90 war, berechnet hat. RFID-Transponder können in den Boden in der Nähe der Regalstehern 80 und 81 eingelassen sein, sodass Fahrzeugpositionsdaten des Flurförderzeugs 50 am Punkt 90 erfasst werden konnten.

Somit wurde das Flurförderzeug 50 in der ersten Teilstrecke L1 auf Basis der ersten Wunschfahrroute 60 geführt. Da während der Fahrt in der ersten Teilstrecke L1 keine weiteren Lokalisierungen von dem Flurförderzeug 50 stattfanden und die Wunschfahrroute 60 aufgrund beispielsweise schlechter eingelagerter Paletten 70 angepasst werden musste, wich die tatsächliche Fahrroute des Flurförderzeugs (die durchgezogene Linie 62) von der Wunschfahrroute 60 ab.

Wenn das Flurförderzeug den Bereich in der Nähe des zweiten Paars von Regalstehern 82 und 83, wie in Fig. 2 zeigt, erreicht hat, wobei z.B. durch Odometriedaten es abgeschätzt werden kann, ob das Flurförderzeug in dem Bereich ist, was alternativ auch sensorisch erfolgen kann, berechnet die Recheneinheit auf Basis der momentanen Position des Flurförderzeugs 50 und des Mittelpunkts 94 zwischen dem weiter zu erwartenden dritten Paar von Regalstehern 84 und 85 eine zweite Wunschfahrroute 64, sodass das Flurförderzeug 50 während der zweiten Teilstrecke L2 auf Basis der zweiten Wunschfahrroute 64 geführt wird.

Der oben dargestellte Prozess wiederholt sich, bis das Flurförderzeug 50 das Ende der Regalgasse erreicht, wobei hierbei festzuhalten ist, dass es sich bei dem in Fig. 2 gezeigten Szenario aufgrund der zahlreichen schlecht eingelagerten Paletten um einen in der Praxis wohl selten relevanten Fall handelt, während die optimale Wunschfahrroute im einem Szenario mit perfekt eingelagerter Paletten geradlinig und exakt zwischen den Regalstehern verlaufend sein wird.

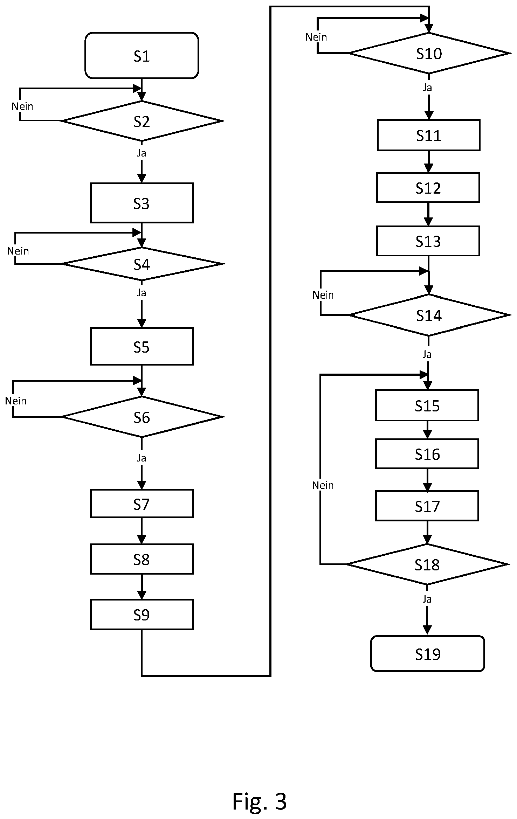

In Fig. 3 ist nun ein Flussdiagramm für ein Verfahren zum Führen des in Fig. 2 gezeigten Flurförderzeugs mittels des in Fig. 1 gezeigten Systems dargestellt. Zunächst einmal wird in Schritt S1 eine gezielte Fahrt des Flurförderzeugs in eine Regalgasse nach Erhalt z.B. eines Transportauftrags gestartet. Bevor ein Startübergabepunkt erreicht wird, ab dem das Flurförderzeug 50 mit dem in Fig. 1 gezeigten System 10 geführt wird, wird das Flurförderzeug vorzugsweise durch ein vorhandenes oder anderweitiges Navigationssystem geführt. Beispielsweise kann das Führen des Flurförderzeugs bis zu dem Startübergabepunkt nur durch eine Konturerfassung von Objekten in seiner Umgebung erfolgen, wobei in Schritt S2 geprüft werden kann, ob der gezielte Regalgang mit einer erwarteten Kontur erkennbar ist. Wenn ja, wird bei Schritt S3 eine Fahrspur mithilfe der erfassten Paletten- und/oder Regalkonturen festgelegt, an denen sich das Flurförderzeug bis zu dem Startübergabepunkt orientieren kann, wobei diese Fahrspur beispielsweise auf Basis einer momentanen Position des Flurförderzeugs und des Mittelpunkts der am Eingang auf beiden Seiten der Regalgasse befindlichen Paletten bestimmt werden kann.

Bei einer Weiterfahrt wird in Schritt S4 geprüft, ob der Startübergabepunkt erreicht worden ist, wobei der Startübergabepunkt beispielsweise durch einen im Eingangsbereich der Regalgasse befindlichen RFID-Transponder gekennzeichnet werden kann. Sobald der Startübergabepunkt erreicht worden ist, erfolgt eine Übergabe von dem bisherigen Navigationssystem zu dem erfindungsgemäßen System, wobei in Schritt S5 eine Wunschfahrroute bis zu dem zu erwartenden ersten Paar von Regalstehern in der Regalgasse berechnet wird. Auf Basis der ersten Wunschfahrroute wird das Flurförderzeug 50 weitergeführt.

Sobald bei Schritt S6 identifiziert wird, dass das Flurförderzeug einen Bereich in der Nähe des ersten Paars von Regalstehern erreicht hat, wird bei Schritt S7 die momentane Position des Flurförderzeugs erfasst, wobei die momentane Position von dem Mittelpunkt zwischen den Regalstehern des ersten Paars abweichen kann. Auf Basis der erfassten momentanen Position des Flurförderzeugs und der Regalsteherpositionsdaten des zu erwartenden zweiten Paars von Regalstehern wird eine zweite Wunschfahrroute in Schritt S8 berechnet, wobei bei einer Weiterfahrt eine Konturerfassung in Schritt S9 durchgeführt wird und die zweite Wunschfahrroute gegebenenfalls angepasst werden kann.

In analoger Weise wird in Schritt S10 geprüft, ob das zweite Paar von Regalstehern erreicht worden ist. Wenn ja, wird in Schritt S11 eine momentane Position des Flurförderzeugs erfasst, wobei in Schritt S12 wiederum eine dritte Wunschfahrroute berechnet wird, welche in Schritt S13 aufgrund einer Konturerfassung gegebenenfalls angepasst werden kann.

Dieser Prozess wiederholt sich, wobei in Schritten S14-S17 die n-te Wunschfahrroute berechnet und gegebenenfalls angepasst werden kann, bis in Schritt S18 festgestellt wird, dass das letzte Paar von Regalstehern in der Regalgasse erreicht worden ist. Im Ausgangsbereich wird vorzugsweise ein Endübergabepunkt eingerichtet, welcher wiederum durch einen RFID-Transponder gekennzeichnet werden kann, wobei der Endübergabepunkt in Schritt S19 erfasst werden kann, sodass eine Übergabe von dem erfindungsgemäßen System zu einem anderen Navigationssystem erfolgen kann.

## Patentansprüche

1. System (10) zum Führen eines Flurförderzeugs (50) in einem Regallager, wobei das Regallager eine Mehrzahl von Regalstehern (80-85) umfasst, wobei das System (10) umfasst:
- eine Sensoreinheit (12), welche dafür eingerichtet ist, Fahrzeugpositionsdaten zu erfassen, welche eine relative oder absolute momentane Position des Flurförderzeugs (50) repräsentieren;
- eine Regalsteherbestimmungseinheit (14), welche dafür eingerichtet ist, wenigstens einen bei einer Weiterfahrt des Flurförderzeugs (50) zu erwartenden Regalsteher (80-85) sowie Regalsteherpositionsdaten zu bestimmen, welche eine relative oder absolute Position des wenigstens einen Regalstehers (80-85) repräsentieren;
- eine Recheneinheit (20), welche dafür eingerichtet ist, mit der Sensoreinheit (12) und der Regalsteherbestimmungseinheit (14) in Kommunikation zu stehen und eine Wunschfahrroute (60; 64) des Flurförderzeugs (50) auf Basis der Fahrzeugpositionsdaten und der Regalsteherpositionsdaten zu berechnen; und
- eine Steuereinheit (30), welche dafür eingerichtet ist, das Flurförderzeug (50) auf Basis der Wunschfahrroute (60; 64) zu führen,
- eine Konturerfassungseinheit (40), welche dafür eingerichtet ist, Konturen von Regalen und den in den Regalen aufgenommenen Gegenständen zu erfassen, **dadurch gekennzeichnet, dass** die Recheneinheit (20) ferner dafür eingerichtet ist, mit der Konturerfassungseinheit (40) in Kommunikation zu stehen und gegebenenfalls die Wunschfahrroute (60; 64) auf Basis der erfassten Konturen anzupassen.

2. System nach Anspruch 1, wobei die Regalsteherbestimmungseinheit (14) dafür eingerichtet ist, mit einer lokalen Speichereinheit, einem Lagerverwaltungssystem oder einem Lagernavigationssystem (42) in Kommunikation zu stehen, wobei die Regalsteherbestimmungseinheit (14) ferner dafür eingerichtet ist, den wenigstens einen Regalsteher (80-85) und/oder die Regalsteherpositionsdaten mithilfe der lokalen Speichereinheit, des Lagerverwaltungssystems oder des Lagernavigationssystems (42) zu bestimmen, ohne den wenigstens einen Regalsteher (80-85) sensorisch erfassen zu müssen.

3. System (10) nach einem der vorhergehenden Ansprüche, wobei die Recheneinheit (12) dafür eingerichtet ist, die Wunschfahrroute (60; 64) derart zu berechnen, dass die Wunschfahrroute (60; 64) und der wenigstens eine Regalsteher (80-85) einen vordefinierten Abstand haben.

4. System (10) nach einem der vorhergehenden Ansprüche, wobei die Regalsteherbestimmungseinheit (14) dafür eingerichtet ist, ein zu erwartendes Paar von Regalstehern (80, 81; 82, 83; 84, 85) auf beiden Seiten einer Regalgasse sowie Regalsteherpositionsdaten von den Regalstehern des Paars (80, 81; 82, 83; 84, 85) zu bestimmen, wobei vorzugsweise die Wunschfahrroute (60; 64) des Flurförderzeugs (50) auf Basis der Fahrzeugpositionsdaten und des Mittelpunkts (92; 94) zwischen den Regalstehern des Paars (82, 83; 84, 85) berechnet wird.

5. System (10) nach einem der vorhergehenden Ansprüche, wobei die Sensoreinheit (12) einen Abstandssensor umfasst, welcher dafür eingerichtet ist, einen Abstand des Flurförderzeugs zu einem Referenzobjekt zu erfassen, wobei der Abstandssensor vorzugsweise ein Time-of-Flight-Sensor ist.

6. System (10) nach einem der vorhergehenden Ansprüche, wobei die Sensoreinheit (12) dafür eingerichtet ist, Odometriedaten des Flurförderzeugs (50) zu erfassen, und/oder wobei die Sensoreinheit (12) ein RFID-Lesegerät umfasst.

7. System (10) nach einem der vorhergehenden Ansprüche, wobei das System (10) ferner einen Antikollisionssensor umfasst, welche dafür eingerichtet ist, Objekte in seiner Umgebung zu erfassen, wobei die Steuereinheit ferner dafür eingerichtet ist, bei Erfassung eines Objekts gegebenenfalls das Flurförderzeug (50) zu bremsen, oder das Flurförderzeug (50) von der Wunschfahrroute (60; 64) umzulenken, um eine Kollision des Flurförderzeugs mit dem Objekt zu vermeiden, wobei vorzugsweise der Antikollisionssensor und die Konturerfassungseinheit durch einen einzelnen Sensor (52, 54) gebildet sind, wobei weiter vorzugsweise der Sensor ein Laserscanner (52, 54) ist.

8. Flurförderzeug (50), umfassend ein System (10) nach einem der Ansprüche 1-7, vorzugsweise ferner umfassend eine Geometriedateneinheit, welche dafür eingerichtet ist, Geometriedaten des Flurförderzeugs abzuspeichern und/oder wobei das Flurförderzeug (50) ein Schmalgangstapler ist.

9. Verfahren zum Führen eines Flurförderzeugs (50) in einem Regallager mittels eines Systems (10) nach einem der Ansprüche 1-7, wobei das System (10) gegebenenfalls einem Flurförderzeug (50) nach Anspruch 8 zugeordnet ist, umfassend:
- Erfassen von Fahrzeugpositionsdaten des Flurförderzeugs (50), welche eine relative oder absolute momentane Position des Flurförderzeugs (50) repräsentieren;
- Bestimmen von wenigstens einem bei einer Weiterfahrt des Flurförderzeugs zu erwartenden Regalsteher (80-85) sowie von Regalsteherpositionsdaten, welche eine relative oder absolute Position des wenigstens einen Regalstehers (80-85) repräsentieren;
- Berechnen einer Wunschfahrroute (60; 64) auf Basis der Regalpositionsdaten und der Fahrzeugpositionsdaten;
- Führen des Flurförderzeugs (50) auf Basis der Wunschfahrroute (60; 64),
- Erfassen von Konturen von Regalen und den in den Regalen aufgenommenen Gegenständen **dadurch gekennzeichnet, dass** es ferner umfasst:
- Anpassen der Wunschfahrroute (60; 64) auf Basis der erfassten Konturen.

10. Verfahren nach Anspruch 9, wobei der wenigstens eine Regalsteher (80-85) und/oder die Regalsteherpositionsdaten des wenigstens einen Regalstehers (80-85) mithilfe einer lokalen Speichereinheit, eines Lagerverwaltungssystems oder eines Lagernavigationssystems (42) bestimmt wird, ohne den wenigstens einen Regalsteher (80-85) sensorisch erfassen zu müssen.

11. Verfahren nach einem der Ansprüche 9 und 10, wobei das Verfahren umfasst:
Bestimmen von einem bei einer Weiterfahrt des Flurförderzeugs (50) zu erwartenden Paar von Regalstehern (80, 81; 82, 83; 84, 85) sowie von Regalsteherpositionsdaten der Regalsteher des Paars (80, 81; 82, 83; 84, 85),
wobei vorzugsweise die Wunschfahrroute (60; 64) des Flurförderzeugs auf Basis der Fahrzeugpositionsdaten und des Mittelpunkts zwischen den Regalstehern des Paars (82, 83; 84, 85) berechnet wird.

12. Verfahren nach einem der Ansprüche 9 bis 11, ferner umfassend:
- Erfassen von einem Abstand des Flurförderzeugs (50) zu einem Referenzobjekt und/oder
- Erfassen von Odometriedaten des Flurförderzeugs (50) und/oder
- Erfassen eines Objekts in der Umgebung und Bremsen des Flurförderzeugs (50), oder Umlenken des Flurförderzeugs von der Wunschfahrroute (60; 64), um eine Kollision des Flurförderzeugs (50) mit dem Objekt zu vermeiden.

13. Verfahren nach einem der Ansprüche 9 bis 12, ferner umfassend:
- Führen des Flurförderzeugs (50) mittels eines vorhandenen bzw. anderweitigen Navigationssystems bis zu einem bestimmten Startübergabepunkt, ab dem das Flurförderzeug mittels des Systems (10) nach einem der Ansprüche 1-8 geführt wird, und/oder
- Führen des Flurförderzeugs mittels des Systems (10) nach einem der Ansprüche 1-8 bis zu einem bestimmten Endübergabepunkt, ab dem das Flurförderzeug (50) mittels eines vorhandenen bzw. anderweitigen Navigationssystems weiter geführt wird.

## Claims

1. System (10) for guiding an industrial truck (50) in a high-bay warehouse, wherein the high-bay warehouse comprises a multiplicity of support rails (80-85), wherein the system (10) comprises:
- a sensor unit (12) which is configured to detect vehicle position data which represent a relative or absolute current position of the industrial truck (50);
- a support rail determination unit (14) which is configured to determine at least one support rail (80-85) to be expected upon further travel of the industrial truck (50) as well as support rail position data which represent a relative or absolute position of the at least one support rail (80-85);
- a computing unit (20) which is configured to be in communication with the sensor unit (12) and the support rail determination unit (14) and calculate a desired driving route (60; 64) of the industrial truck (50) on the basis of the vehicle position data and the support rail position data; and
- a control unit (30) which is configured to guide the industrial truck (50) on the basis of the desired driving route (60; 64),
- a contour detection unit (40) which is configured to detect contours of shelves and the items accommodated on the shelves,
**characterised in that** the computing unit (20) is furthermore configured to be in communication with the contour detection unit (40) and where necessary adjust the desired driving route (60; 64) on the basis of the detected contours.

2. System according to Claim 1, wherein the support rail determination unit (14) is configured to be in communication with a local storage unit, a warehouse management system or a warehouse navigation system (42), wherein the support rail determination unit (14) is furthermore configured to determine the at least one support rail (80-85) and/or the support rail position data with the aid of the local storage unit, the warehouse management system or the warehouse navigation system (42) without having to detect the at least one support rail (80-85) using sensors.

3. System (10) according to any one of the preceding claims, wherein the computing unit (12) is configured to calculate the desired driving route (60; 64) in such a manner that the desired driving route (60; 64) and the at least one support rail (80-85) have a predefined spacing.

4. System (10) according to any one of the preceding claims, wherein the support rail determination unit (14) is configured to determine a pair, to be expected, of support rails (80, 81; 82, 83; 84, 85) on both sides of a shelf aisle as well as support rail position data of the support rails of the pair (80, 81; 82, 83; 84, 85), wherein the desired driving route (60; 64) of the industrial truck (50) is preferably calculated on the basis of the vehicle position data and of the centre point (92; 94) between the support rails of the pair (82, 83; 84, 85).

5. System (10) according to any one of the preceding claims, wherein the sensor unit (12) comprises a distance sensor which is configured to detect a distance from the industrial truck to a reference object, wherein the distance sensor is preferably a time-of-flight sensor.

6. System (10) according to any one of the preceding claims, wherein the sensor unit (12) is configured to detect odometry data of the industrial truck (50), and/or wherein the sensor unit (12) comprises an RFID reading device.

7. System (10) according to any one of the preceding claims, wherein the system (10) furthermore comprises an anti-collision sensor which is configured to detect objects in its surroundings, wherein the control unit is furthermore configured, where necessary, to brake the industrial truck (50) if an object is detected, or steer the industrial truck (50) away from the desired driving route (60; 64) in order to avoid a collision of the industrial truck with the object, wherein the anti-collision sensor and the contour detection unit are preferably formed by a single sensor (52, 54), wherein the sensor is further preferably a laser scanner (52, 54).

8. Industrial truck (50), comprising a system (10) according to any one of Claims 1-7, furthermore preferably comprising a geometrical data unit which is configured to store geometrical data of the industrial truck and/or wherein the industrial truck (50) is a narrow-aisle truck.

9. Method for guiding an industrial truck (50) in a high-bay warehouse by means of a system (10) according to any one of Claims 1-7, wherein the system (10) is, where necessary, assigned to an industrial truck (50) according to Claim 8, comprising:
- detecting vehicle position data of the industrial truck (50) which represent a relative or absolute current position of the industrial truck (50);
- determining at least one support rail (80-85) to be expected upon further travel of the industrial truck as well as support rail position data which represent a relative or absolute position of the at least one support rail (80-85);
- calculating a desired driving route (60; 64) on the basis of the shelf position data and the vehicle position data;
- guiding the industrial truck (50) on the basis of the desired driving route (60; 64),
- detecting contours of shelves and the items accommodated on the shelves, **characterised in that** it further comprises:
- adjusting the desired driving route (60; 64) on the basis of the detected contours.

10. Method according to Claim 9, wherein the at least one support rail (80-85) and/or the support rail position data of the at least one support rail (80-85) is determined with the aid of a local storage unit, a warehouse management system or a warehouse navigation system (42) without having to detect the at least one support rail (80-85) using sensors.

11. Method according to any one of Claims 9 and 10, wherein the method comprises:
determining a pair, to be expected in the case of further travel of the industrial truck (50), of support rails (80, 81; 82, 83; 84, 85) and of support rail position data of the support rails of the pair (80, 81; 82, 83; 84, 85),
wherein the desired driving route (60; 64) of the industrial truck is preferably calculated on the basis of the vehicle position data and the centre point between the support rails of the pair (82, 83; 84, 85).

12. Method according to any one of Claims 9 to 11, further comprising:
- detecting a distance from the industrial truck (50) to a reference object and/or
- detecting odometry data of the industrial truck (50) and/or
- detecting an object in the surroundings and braking the industrial truck (50), or steering the industrial truck away from the desired driving route (60; 64) in order to avoid a collision of the industrial truck (50) with the object.

13. Method according to any one of Claims 9 to 12, further comprising:
- guiding the industrial truck (50) by means of an existing or other navigation system up to a certain starting handover point from which the industrial truck is guided by means of the system (10) according to any one of Claims 1-8, and/or
- guiding the industrial truck by means of the system (10) according to any one of Claims 1-8 up to a certain end handover point from which the industrial truck (50) is guided further by means of an existing or other navigation system.

## Revendications

1. Système (10) de guidage d'un chariot de manutention (50) dans un entrepôt à rayonnages, l'entrepôt à rayonnages comprenant une pluralité de montants de rayonnage (80-85), le système (10) comprenant :
- une unité de détection (12) conçue pour acquérir des données de position de véhicule qui représentent une position instantanée relative ou absolue du chariot de manutention (50) ;
- une unité de détermination de montant de rayonnage (14) conçue pour déterminer au moins un montant de rayonnage (80-85), à attendre lors d'une poursuite du déplacement du chariot de manutention (50), ainsi que des données de position de montant de rayonnage qui représentent une position relative ou absolue dudit au moins un montant de rayonnage (80-85) ;
- une unité de calcul (20) conçue pour être en communication avec l'unité de détection (12) et avec l'unité de détermination de montant de rayonnage (14) et pour calculer un itinéraire souhaité (60 ; 64) du chariot de manutention (50) en se basant sur les données de position de véhicule et sur les données de position de montant de rayonnage ; et
- une unité de commande (30) conçue pour guider le chariot de manutention (50) en se basant sur l'itinéraire souhaité (60 ; 64),
- une unité de détection de contours (40) conçue pour détecter les contours des rayonnages et des objets reçus dans les rayonnages,
**caractérisé en ce que** l'unité de calcul (20) est en outre conçue pour être en communication avec l'unité de détection de contours (40) et pour, le cas échéant, adapter l'itinéraire souhaité (60 ; 64) en se basant sur les contours détectés.

2. Système selon la revendication 1,
dans lequel l'unité de détermination de montant de rayonnage (14) est conçue pour être en communication avec une unité de mémoire locale, un système de gestion d'entrepôt ou un système de navigation d'entrepôt (42),
l'unité de détermination de montant de rayonnage (14) est en outre conçue pour déterminer ledit au moins un montant de rayonnage (80-85) et/ou les données de position de montant de rayonnage à l'aide de l'unité de mémoire locale, du système de gestion d'entrepôt ou du système de navigation d'entrepôt (42), sans avoir à détecter par capteur ledit au moins un montant de rayonnage (80-85).

3. Système (10) selon l'une des revendications précédentes,
dans lequel l'unité de calcul (12) est conçue pour calculer l'itinéraire souhaité (60 ; 64) de telle sorte que l'itinéraire souhaité (60 ; 64) et ledit au moins un montant de rayonnage (80-85) présentent une distance prédéfinie.

4. Système (10) selon l'une des revendications précédentes,
dans lequel l'unité de détermination de montant de rayonnage (14) est conçue pour déterminer une paire attendue de montants de rayonnage (80, 81 ; 82, 83 ; 84, 85) de part et d'autre d'une allée entre rayonnages, ainsi que les données de position de montant de rayonnage relatives aux montants de rayonnage de ladite paire (80, 81 ; 82, 83 ; 84, 85),
de préférence, l'itinéraire souhaité (60 ; 64) du chariot de manutention (50) est calculé sur la base des données de position de véhicule et du point central (92 ; 94) entre les montants de rayonnage de ladite paire (82, 83 ; 84, 85).

5. Système (10) selon l'une des revendications précédentes,
dans lequel l'unité de détection (12) comprend un capteur de distance conçu pour détecter une distance du chariot de manutention par rapport à un objet de référence, le capteur de distance étant de préférence un capteur de temps de vol.

6. Système (10) selon l'une des revendications précédentes,
dans lequel l'unité de détection (12) est conçue pour détecter des données odométriques du chariot de manutention (50), et/ou l'unité de détection (12) comprend un lecteur RFID.

7. Système (10) selon l'une des revendications précédentes,
dans lequel le système (10) comprend en outre un capteur anticollision conçu pour détecter des objets dans son environnement,
l'unité de commande est en outre conçue pour, lors de la détection d'un objet, éventuellement freiner le chariot de manutention (50) ou dévier le chariot de manutention (50) de l'itinéraire souhaité (60 ; 64), afin d'éviter une collision du chariot de manutention avec l'objet,
de préférence, le capteur anticollision et l'unité de détection de contours sont constitués par un seul capteur (52, 54),
de préférence encore, le capteur est un scanner laser (52, 54).

8. Chariot de manutention (50) comprenant un système (10) selon l'une des revendications 1 à 7, de préférence comprenant en outre une unité pour données géométriques conçue pour mémoriser les données géométriques du chariot de manutention, et/ou le chariot de manutention (50) étant un chariot élévateur pour allées étroites.

9. Procédé de guidage d'un chariot de manutention (50) dans un entrepôt à rayonnages au moyen d'un système (10) selon l'une des revendications 1 à 7, ledit système (10) étant associé, le cas échéant, à un chariot de manutention (50) selon la revendication 8, consistant à :
- acquérir des données de position de véhicule du chariot de manutention (50), représentatives d'une position instantanée relative ou absolue du chariot de manutention (50) ;
- déterminer au moins un montant de rayonnage (80-85), à attendre lors d'une poursuite du déplacement du chariot de manutention, ainsi que des données de position de montant de rayonnage qui représentent une position relative ou absolue dudit au moins un montant de rayonnage (80-85) ;
- calculer un itinéraire souhaité (60 ; 64) en se basant sur les données de position de rayonnage et sur les données de position de véhicule ;
- guider le chariot de manutention (50) en se basant sur l'itinéraire souhaité (60 ; 64),
- détecter des contours des rayonnages et des objets reçus dans les rayonnages,
**caractérisé en ce qu'**il consiste en outre à :
- adapter l'itinéraire souhaité (60 ; 64) en se basant sur les contours détectés.

10. Procédé selon la revendication 9,
dans lequel ledit au moins un montant de rayonnage (80-85) et/ou les données de position de montant de rayonnage dudit au moins un montant de rayonnage (80-85) sont déterminés à l'aide d'une unité de mémoire locale, d'un système de gestion d'entrepôt ou d'un système de navigation d'entrepôt (42), sans avoir à détecter par capteur ledit au moins un montant de rayonnage (80-85).

11. Procédé selon l'une des revendications 9 et 10, le procédé consistant à :
déterminer une paire de montants de rayonnage (80, 81 ; 82, 83 ; 84, 85), à attendre lors d'une poursuite du déplacement du chariot de manutention (50), ainsi que les données de position de montant de rayonnage relatives aux montants de rayonnage de ladite paire (80, 81 ; 82, 83 ; 84, 85),
de préférence, l'itinéraire souhaité (60 ; 64) du chariot de manutention est calculé sur la base des données de position de véhicule et du point central entre les montants de rayonnage de ladite paire (82, 83 ; 84, 85).

12. Procédé selon l'une des revendications 9 à 11, consistant en outre à :
- détecter une distance du chariot de manutention (50) par rapport à un objet de référence, et/ou
- acquérir des données odométriques du chariot de manutention (50), et/ou
- détecter un objet dans l'environnement et freiner le chariot de manutention (50), ou dévier le chariot de manutention de l'itinéraire souhaité (60 ; 64), afin d'éviter une collision du chariot de manutention (50) avec l'objet.

13. Procédé selon l'une des revendications 9 à 12, consistant en outre à :
- guider le chariot de manutention (50) au moyen d'un système de navigation existant ou autre jusqu'à un point de transfert initial défini, à partir duquel le chariot de manutention est guidé au moyen du système (10) selon l'une des revendications 1 à 8, et/ou
- guider le chariot de manutention au moyen du système (10) selon l'une des revendications 1 à 8 jusqu'à un point de transfert final défini, à partir duquel le chariot de manutention (50) continue d'être guidé au moyen d'un système de navigation existant ou autre.
